# EUROPEAN PATENT APPLICATION

(11) **EP 2 397 762 A1**
(43) Date of publication of application: **21.12.2011**
(21) Application number: 10166291.4
(22) Date of filing: 17.06.2010
(51) Int. Cl.: F23R 3/04, F23R 3/54, F23M 99/00, F02C 7/24

(54) **Damping device for damping pressure oscillations within a combustion chamber of a turbine**

(71) Applicant: SIEMENS AKTIENGESELLSCHAFT, 80333 München (DE)
(72) Inventor: Bulat, Ghena, Newark, Notts, NG24 2TB (GB); Maltson, John David, Skellingthorp, Lincoln, LN6 5AX (GB)

(57) **Abstract**

A damping device (122; 222; 322; 422; 522) for damping pressure oscillations within a combustion chamber (106; 206; 306; 406; 506) of a turbine (102; 202; 302; 402; 402; 502) comprises a radially extending damping device body (123; 223; 323; 423; 523), wherein the damping device body (123; 223; 323; 423; 523) comprises a radially inner circumferential edge portion (124; 224; 324; 424; 524) and a radially outer circumferential edge portion (126; 226; 326; 426; 526), wherein a through hole (136a; 236a; 336a; 436a; 536a) is formed in the damping device body (123; 223; 323; 423; 523), wherein the through hole (136a; 236a; 336a; 436a; 536a) comprises a tapered shape.

## Description

### Field of Invention

The invention relates to a damping device for damping pressure oscillations within a combustion chamber of a turbine.

Further, the invention relates to a combustion arrangement for a turbine.

Further, the invention relates to a turbine.

Further, the invention relates to a method of damping pressure oscillations within a combustion chamber of a turbine.

### Art Background

A combustion arrangement of a gas turbine usually comprises a combustion chamber which is arranged within an outer casing and which defines a space for burning a mixture of fuel and compressed air. One example of such a combustion arrangement is a dry low emission (DLE) combustion arrangement which operates on a lean mixture of fuel and compressed air, thereby producing a low amount of NOₓ (nitrogen oxides) and compact flames.

It is commonly known that pressure oscillations may arise within the combustion chamber during operation of the gas turbine which may influence operational conditions of the combustion chamber and thus may hamper a performance of the combustion chamber. Accordingly, the performance or efficiency of the gas turbine may be reduced.

These pressure oscillations may be generated due to combustion flow dynamics of gases within the combustion chamber, particularly due to the lean mixture of air and fuel which is used for DLE. Combustion flow dynamics may be generated by flame excitation or aerodynamic induced excitation within the combustion chamber during the burning process. Further, insufficient damping of a housing of the combustion chamber may also contribute to pressure oscillations within the combustion chamber, since oscillations of the housing may change the space defined by the combustion chamber housing.

Further, pressure oscillations within the damping chamber may arise due to gas flow dynamics particularly of compressed air in a space defined between the outer casing of the combustion arrangement and the housing of the combustion chamber particularly upon this gas flow entering the combustion chamber. For example, when a swirler is arranged at a supply inlet of the combustion chamber, flow dynamics within the combustion chamber may be modified such that pressure oscillations within the combustion chamber may arise. It may be generally desired that a gas inlet flow comprising a high Mach number may be present to decouple the combustion chamber from pressure oscillations arising from an outer flow surrounding the combustion arrangement.

In order to damp such pressure oscillation within the combustion chamber, different measures are known. A geometry of the combustion chamber may be modified in that, for example, a length extension of the combustion chamber may be changed. Further, a damping device may be arranged within the combustion chamber or outside of the combustion chamber, in order to damp particular frequencies or even frequency spectra of the pressure oscillations. Such damping devices may be particularly arranged at pressure oscillation anti-nodes. Arranging damping devices in such a way that the damping devices may surround the combustion chamber but being spaced from an inlet supply to the combustion chamber may offer an undisturbed gas flow into the combustion chamber. However, the full load characteristics of the combustion chamber may be altered, eventually leading to increased combustion dynamics within the combustion chamber in terms of unintentionally generating oscillation resonance of pressure oscillations within the combustion chamber. A frequency or frequency spectrum of pressure oscillations within the casing of the combustion chamber and/or a vortex shedding may then not sufficiently be damped.

SE 522 064 C2 discloses a combustion arrangement which comprises an outer casing and a combustion chamber. A ring shaped support is arranged upstream of a center of the combustion chamber and extends from the combustion chamber to the outer casing. The ring shaped support comprises a thin body in which through holes of different shapes are formed.

US 4,122,674 discloses that pressure oscillations within a combustion chamber of a combustion arrangement of a gas turbine may be suppressed by arranging a perforated annular disc within the combustion chamber. The disc extends perpendicular to surface walls of the combustion chamber. Further, Helmholtz horns are arranged at an upstream surface of the perforated annular disc.

However, the above described measures may result in a poor damping of pressure oscillations within the combustion chamber.

### Summary of the Invention

It may be an object of the invention to provide a damping device for damping pressure oscillations within a combustion chamber of a turbine, a combustion arrangement for a turbine, a turbine, and a method of damping pressure oscillations within a combustion chamber of a turbine with improved pressure oscillations damping capabilities.

In order to achieve the object defined above, a damping device for damping pressure oscillation within the combustion chamber of a turbine, a combustion arrangement for a turbine, a turbine, and a method of damping pressure oscillations within a combustion chamber of a turbine according to the independent claims are provided.

According to an exemplary aspect of the invention, a damping device for damping pressure oscillations within a combustion chamber of a turbine may be provided, the damping device comprising a radially extending damping device body, wherein the damping device body may comprise a radially inner circumferential edge portion and a radially outer circumferential edge portion, wherein a through hole may be formed in the damping device body, wherein the through hole may comprise a tapered shape.

According to another exemplary aspect of the invention, a combustion arrangement for a turbine may be provided, the combustion arrangement comprising an outer casing, a combustion chamber for defining a combustion space for burning fuel, wherein the combustion chamber may be arranged within the casing, and a damping device as defined above, wherein the damping device may be arranged within the casing outside of the combustion chamber.

According to another exemplary aspect of the invention, a turbine, particularly a gas turbine, may be provided, the turbine comprising a combustion arrangement as defined above.

According to another exemplary aspect of the invention, a method of damping pressure oscillations within a combustion chamber of a turbine by using a damping device as defined above may be provided.

In the context of the present application, the term "damping pressure oscillations within a combustion chamber" may particularly denote to at least partially reduce or suppress or eliminate pressure oscillations or vibrations of a (gas) flow within a combustion chamber. In particular, damping pressure oscillations may be performed by reducing pressure oscillations arising within the combustion chamber and/or by reducing pressure oscillations arising outside of the combustion chamber which may affect flow dynamics within the combustion chamber and thus may create pressure oscillations within the combustion chamber. In particular, pressure oscillations of a particular frequency or a frequency spectrum may be reduced. In particular, a (natural) frequency of a surrounding of the combustion chamber may be reduced which may lead to resonance oscillations within the combustion chamber particularly under the effect of flow dynamics within the combustion chamber.

The damping device, the combustion arrangement, the turbine, and the method according to the exemplary aspects of the invention may offer improved damping capabilities in terms of efficiently reducing or even eliminating a frequency or frequency spectrum of pressure oscillations within the combustion chamber particularly due to a constructive design of the damping device and/or an arrangement of the damping device within the combustion chamber. Further, operational conditions of the combustion chamber may not be affected and, thus, a performance or an efficiency of the combustion chamber and therefore of the gas turbine may not be reduced.

Arranging the damping device outside of the combustion chamber within a space defined between the outer casing and (a housing of) the combustion chamber may allow for providing improved damping capabilities of pressure oscillations within the combustion chamber in terms of modifying a volume of the space defined between the outer casing and the combustion chamber. Thus, pressure oscillations within the combustion chamber arising from a surrounding of the combustion chamber in terms of oscillations of the outer casing and/or a gas flow in the space defined between the outer casing and the combustion chamber may be efficiently reduced or prevented.

Further, the provision of the though hole in the damping device body may allow for undisturbed flow dynamics outside of the combustion chamber, since a passage through the damping device body may be provided. Therefore flow dynamics at a supply inlet of the combustion chamber and/or in the combustion chamber may not be affected by the damping device. Thus, operational conditions of the combustion chamber may remain unchanged, thereby not reducing a performance or efficiency of the combustion chamber.

The through hole may act as a Helmholtz resonator particularly due to its shape such that the damping capabilities of the damping device may be further improved.

The tapered shape of the through hole may further offer the possibility to adapt the mass of the damping device for tuning the damping capabilities of the damping device in terms of changing a particular frequency or a frequency spectrum of the pressure oscillations arising outside of the combustion chamber.

Further, flow dynamics in the space defined between the outer casing and (the housing of) the combustion chamber may be directed, since flow coefficients at ending portions of the through hole may be modified due to different diameters of the ending portions of the through hole. In particular, a flow coefficient of an ending portion of the through hole which may comprise a larger cross-section compared to the other, tapered ending portion of the through hole may be larger than the flow coefficient of the other, tapered ending portion. Thus, a flow (volume) through the through hole may be reduced in a direction along the tapered shape of the through hole.

Next, further exemplary embodiments of the damping device for damping pressure oscillations within a combustion chamber of a turbine will be explained. However, these embodiments also apply to the combustion arrangement for a turbine, the turbine, and the method of damping pressure oscillations within a combustion chamber of a turbine.

The damping device body may comprise an annular shape, particularly an annular, axially symmetrical shape, wherein the through hole may be arranged at any suitable position along a circumference of the damping device body.

A thickness of the damping device body may be small compared to an extension of the damping device body in a radial direction of the damping device body, leading to a small and compact design of the combustion arrangement.

The damping device, particularly the damping device body, may be single-pieced and/or may be made of a metal having a high thermal coefficient of conductivity.

The through hole may extend in a transverse direction, particularly a perpendicular direction, with respect to at least one of upper and lower surfaces, particular with respect to both of the upper and lower surfaces, of the damping device body.

The damping device body may comprise a (particularly substantially) truncated conical shape or may comprise a (particularly substantially) flat shape. Both measures may offer the possibility of easily and cost-effectively manufacturing the damping device.

At least part of the radially inner and radially outer edge portions of the damping device body may be bent such that the edge portions of the damping device body may extend in a transverse direction with respect to the radial extension of the damping device body. In particular, the radially inner and radially outer edge portions may be bent in opposite directions with respect to one another. Thus, fixing, e. g. clamping, the damping device body at the bent edge portions may be facilitated particularly in the case of the radially extending damping device body being inclined with respect to mounting elements of the combustion arrangement. Further, due to the bent edge portions of the damping device body, the damping device may be arrangable in any suitable position outside the combustion chamber within the outer casing of the combustion arrangement.

An ending portion of the through hole may be chamfered. Within a sectional plane being oriented parallel to a longitudinal direction of the through hole, an ending portion of the through hole may comprise a rounded shape. In particular, the through hole may be chamfered or rounded along the entire longitudinal extension of the through hole. In particular, an ending portion of the through hole may be chamfered and a portion of the through hole being located adjacent to the chamfered ending portion may be rounded or vice versa. Both measures may allow for using conventional manufacturing equipment upon manufacturing the through hole. Further, a flow coefficient of the through hole as well as a mass of the damping device body may be adaptable according to the desired damping and flow directing capabilities of the damping device.

The damping device body may comprise at least one further through hole, wherein the at least one further through hole may comprise a tapered shape, wherein the through hole and the at least one further through hole may comprise counter directionally tapered shapes. Thus, damping capabilities of the damping device may be further improved in terms of providing a further measure for tuning the mass of the damping device. Further, unchanged flow dynamics outside the combustion chamber may be further supported, since a further passage through the damping device body may be provided. Further, due to the counter-directional shape of the through hole and the at least one further through hole, flow directing capabilities of the through hole and the at least one further through hole may be different to one another such that, particularly by arranging the through hole and the at least one further through hole parallel to one another, a counter-directional flow through the damping device may be achieved. Therefore, particularly under the action of only small pressure fluctuations, a circulation of a gas flow through the damping device may be provided, whereby the damping device may be usable for cooling purposes of the outer casing in that thermal heat of portions of the outer casing may be transferred along with the circulating gas flow.

The through hole and the at least one further through hole may be arranged at radially different distances (measured) from a center of the damping device, particularly of the damping device body. Thus, a total radial extension of the damping device body may be used for providing the through hole and the at least one further through hole. Further, different flow directions of the gas may be spatially separated from one another, thereby increasing the cooling capabilities of the damping device.

Alternatively or additionally, the through hole and the at least one further through hole may be arranged at a radially equal distance (measured) from a center of the damping device, particularly of the damping device body, thereby allowing for reducing a radial extension of the damping device body.

In particular, due to the counter-directional tapered shapes of the through hole and the at least one further through hole, upper and lower surfaces of the damping device body may comprise wavy or undulating surface shapes.

In particular, a plurality of through holes and a plurality of further through holes may be formed in the damping device body with shapes of the plurality of through holes and the plurality of further through holes may be counter-directional to one another.

In particular, the plurality of through hole and the through hole or the plurality of further through holes and the at least one further through hole may be identically designed to one another.

In particular, a number of the plurality of through holes and a number of the plurality of further through holes may be identical to one another.

In particular, locations of (the plurality of) the through hole(s) and the at least further through hole (the plurality of the further through holes) with respect to one another along a circumference of the damping device body may be chosen according to desired damping and flow directing capabilities of the damping device. In particular, at least one of the plurality of through holes and the plurality further through holes may be arranged with respect to one another at equal distances along the circumference of the damping device body. Further, when seen in a radial direction, the plurality of through holes and the plurality of further through holes may be located adjoined with respect to one another or may be spaced apart along a circumference of the damping device body.

In particular, the plurality of through holes and the plurality of further through holes may be arranged at positions of equal distances along a circumference of the damping device with respect to one another with the positions of the plurality of further through holes being located at a half distance between two adjacent through holes of the plurality of through holes.

Next, further exemplary embodiments of the combustion arrangement for a turbine may be explained. However, these embodiments also apply to the damping device for damping pressure oscillations within a combustion chamber of a turbine, the turbine, and the method of damping pressure oscillations within a combustion chamber of a turbine.

The outer casing may be part of a central portion of the gas turbine.

The damping device may extend transversely, particularly perpendicularly, with respect to the outer casing and an axial extension of (the housing of) the combustion chamber, thereby dividing (a volume of) the space defined between the outer casing and the (housing of the) combustion chamber. Therefore, the combustion arrangement may comprise a compact design, wherein the damping device may further act as a support structure.

The damping device may be arranged downstream of a center of the combustion chamber (e. g. an outlet of the combustion chamber through which a mixture of burnt fuel and compressed air is transported away from the combustion chamber), particularly at an ending portion of the combustion chamber, further particularly downstream of the combustion chamber. In particular, a direction from upstream to downstream may be defined along a flow direction of the mixture of the compressed air and the fuel through the combustion chamber. Thus, while providing pressure oscillations damping capabilities a full load of the combustion chamber may not be altered compared to a position of the damping device in the vicinity of a center region of the combustion chamber. Further, flow dynamics within the space defined between (the housing of) the combustion chamber and the outer casing may not be negatively affected. Due to the arrangement of the damping device downstream of a center of the combustion chamber, cooling of further downstream parts of the outer casing of the combustion arrangement may be improved. In connection with the counter-directionally tapered shapes of the through hole and the at least one further through hole, a circulation of the usually stagnant gas flow outside of the combustion chamber from a region in the vicinity of a center region of the combustion chamber towards downstream through the damping device and again towards upstream through the damping device may be provided, thus leading to an efficient cooling of downstream arranged components of the combustion arrangement.

The damping device may circumferentially surround a longitudinal axis of the combustion chamber. In the context of this application, the term "longitudinal axis" of the combustion chamber may particularly denote an (infinite) axis along a length extension of the combustion chamber with a shape of the combustion chamber being not necessarily axially symmetrical with respect around the longitudinal axis. The term "the damping device surrounding a longitudinal axis of the combustion chamber" may particularly denote the damping device surrounding the combustion chamber or the damping device being arranged downstream and, when seen along the longitudinal axis, spaced apart from the combustion chamber but surrounding the combustion chamber when seen onto a (particularly cross-) sectional plane of the combustion chamber. In particular, the damping device may circumferentially surround the combustion chamber when being arranged at an ending portion of the combustion chamber. Thus, uniform damping of pressure oscillations within the combustion chamber along a circumference of the combustion chamber may be provided.

The combustion arrangement may further comprise at least one further combustion chamber for defining a further combustion space for burning fuel, wherein the damping device circumferentially surrounds the longitudinal axis of the combustion chamber and a further longitudinal axis of the at least one further combustion chamber. The terms "further longitudinal axis" and "the damping device surrounding a further longitudinal axis of the at least one further combustion chamber" may be similarly defined as explained above. Using a single damping device for at least two combustion chambers may allow for a constructively easy and cost-effective design of the combustion arrangement while offering sufficient and particularly uniform pressure oscillations damping capabilities. In particular, the combustion chamber and the at least one further combustion chamber may be annularly arranged around a longitudinal axis of the turbine.

The combustion arrangement may further comprise a parting plate adapted for at least partially parting a space defined between the outer casing and the combustion chamber and/or the at least one further combustion chamber. Thus, the parting plate may divide or split the space defined between the outer casing and the combustion chamber and/or the further combustion chamber, thereby further improving damping pressure oscillations within the combustion chamber and the at least one further combustion chamber. In addition, a mass and/or an arrangement and/or a design of the parting plate may be adjustable for damping pressure oscillations within the combustion chamber.

The parting plate may transversely extend from the damping device in a downstream direction. Thus, directing a gas flow within the space defined between the outer casing and (the housing of) the combustion chamber and/or (a further housing of) the at least one further combustion chamber may be improved.

The combustion arrangement may comprise at least one further parting plate or a plurality of parting plates adapted for at least partially parting a space defined between the outer casing and the combustion chamber and/or the at least one further combustion chamber. The parting plates may be identically designed to one another.

Next, further exemplary embodiments of the turbine may be explained. However, these embodiments also apply to the damping device for damping pressure oscillations within a combustion chamber of a turbine, the combustion arrangement of the turbine, and the method of damping pressure oscillations within a combustion chamber of a turbine.

In particular, the turbine may be adapted as a gas turbine particularly operating according to a DLE principle.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Fig. 1: illustrates a cross-sectional view of a combustion arrangement of a gas turbine according to an exemplary embodiment of the invention.
- Fig. 2: illustrates a cross-sectional view of a combustion arrangement of a gas turbine according to another exemplary embodiment of the invention.
- Fig. 3a: illustrates a perspective cross-sectional view of a combustion arrangement of a gas turbine according to another exemplary embodiment of the invention.
- Fig. 3b: illustrates a perspective view of a damping device in Fig. 3a according to an exemplary embodiment of the invention.
- Fig. 4: illustrates a cross-sectional view of a combustion arrangement of a gas turbine according to another exemplary embodiment of the invention.
- Fig. 5a: illustrates a cross-sectional view of a combustion arrangement of a gas turbine according to another exemplary embodiment of the invention.
- Fig. 5b: illustrates a schematic plain view of a damping device in Fig. 5a according to another exemplary embodiment of the invention.

### Detailed Description

The illustration in the drawing is schematic. It is noted that in different figures, similar or identical elements are provided with the same reference signs or with reference signs, which are different from the corresponding reference signs only within the first digit.

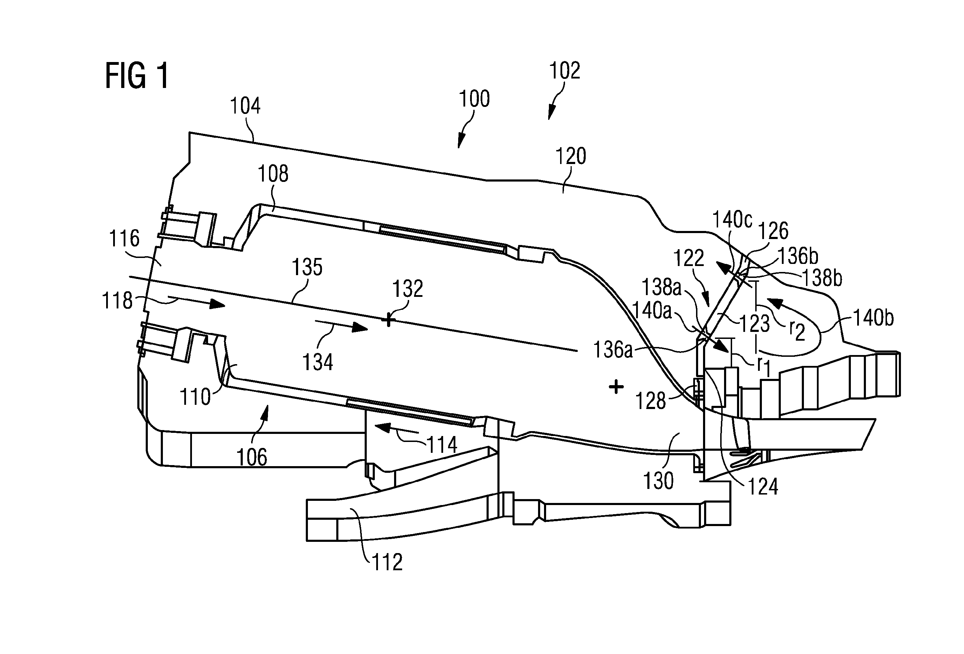

Referring to Fig. 1, a combustion arrangement 100 of a gas turbine 102 is illustrated.

The combustion arrangement 100 comprises an outer casing 104 in which a combustion chamber 106 is arranged. The combustion chamber 106 comprises a housing 108 which defines an inner space 110 for burning fuel, e. g. natural gas, kerosene or diesel.

The combustion arrangement 100 further comprises a first inlet 112 through which compressed air is supplied to the inner space 110 of the combustion chamber 106 along a supply path indicated by an arrow 114. The fuel can be supplied to the combustion chamber 106 via a second inlet 116 along a direction indicated by an arrow 118.

The combustion arrangement 100, particularly the combustion chamber 106, is susceptible to pressure oscillations arising from flame excitation and aerodynamic induced excitation within the combustion chamber 106, oscillations of the housing 108 of the combustion chamber 106, pressure oscillations of a gas, e. g. the compressed air, within a space 120 defined within the outer casing 104 outside of the combustion chamber 106, and oscillations of the outer casing 104 of the combustion arrangement 100.

These pressure oscillations negatively affect operational conditions of the gas turbine 102, since the combustion chamber 106 may be e. g. excited to resonance oscillations, thereby affecting flow dynamics through the inner space 110 of the combustion chamber 106.

In order to damp such pressure oscillations within the combustion chamber 106, a damping device 122 is arranged within the inner space 122. The damping device 122 comprises a perforated damping device body 123 of annular, truncated conical shape. Radially inner and radially outer edge portions 124, 126 of the damping device 122 are bent with respect to a radial extension of the damping device 122. Further, the edge portions 124, 126 are counter-directionally bent with respect to one another, in order to facilitate fixing, e.g. clamping, the edge portions 124, 126 of the damping device 122 at the outer casing 104 and a holding device 128 surrounding an ending portion 130 of the combustion chamber 106. Here, the ending portion 130 of the combustion chamber 106 forms an outlet of the combustion chamber 106 through which a mixture of burnt compressed air and fuel is transferred away from the combustion chamber 106.

The damping device 122 is arranged downstream of a center 132 of the combustion chamber 106 with the center 132 being defined as middle region along an extension of the combustion chamber 106 when seen in its radial and an axial direction. In this context, a direction from upstream towards downstream is indicated by an arrow 134.

Further, the damping device 122 circumferentially surrounds a longitudinal axis 135 of the combustion chamber 106 which is defined as a rotational axis of a cylindrical middle portion of the combustion chamber 106 in that the damping device 122 surrounds the ending portion 130 of the combustion chamber 106. For illustration purposes, a lower portion of the annular shaped damping device 122 is omitted.

The damping device 122 comprises a plurality of through holes 136, in the shown embodiment a plurality of through holes 126a and a further plurality of through holes 126b, which are formed in the damping device body 123 and are arranged along two circumferential lines of the damping device 122. The through holes 136a are arranged at a distance r₁ measured from a center of the damping device 122, and the through holes 126b are arranged at a distance r₂ measured from the center of the damping device 122. The through holes 136a, 136b are tapered with ending portions 138a, b of the through holes 136a, b being chamfered in a counter-directional way. The through holes 136a, b are arranged adjacent to one another when seen in a radial direction of the damping device body 123.

The arrangement of the damping device 122 allows for splitting the space 122 defined between the outer casing 104 and the housing 108 of the combustion chamber 106 into two portions such that, in operation of the gas turbine 102, an oscillation frequency of the outer casing 104 and/or the gas in the space 120 are modified. Thus, pressure oscillations arising within the combustion chamber 106 are at least partially reduced.

Further, in operation of the gas turbine 102, a gas flow through the through holes 136a, 136b of the damping device 122 is induced along directions indicated by arrows 140a-140c, such that cooling of the outer casing 104 downstream of the damping device 122 is enabled by gas convection, since these casing portion represents the hottest parts of the outer casing 104.

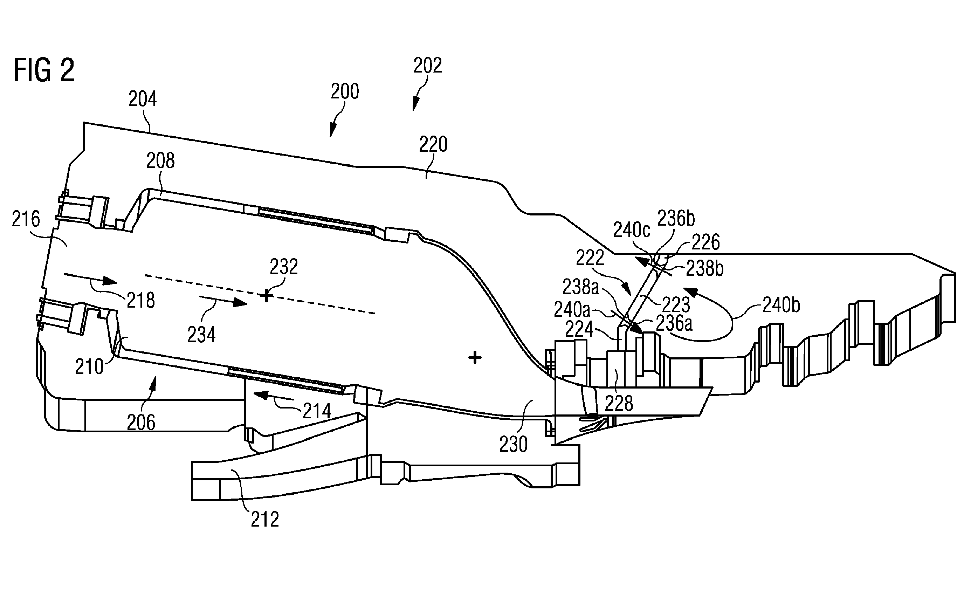

Referring to Fig. 2, a combustion arrangement 200 of a gas turbine 202 according to a different gas turbine, particularly a different casing arrangment is illustrated.

The combustion arrangement 100 and the combustion arrangement 200 are identical except for the constructive design of an ending portion 150, 250 of the outer casing 104, 204. In the embodiment of Fig. 2, the outer casing 204 comprises a substantially cylindrical shape such that a larger space 220 is provided. Further, the damping device 222, which is identical to the damping device 122 illustrated in Fig. 1, is arranged downstream of an ending portion 230 of the combustion chamber 206.

The location of the damping device 222 results in a reduced impact on a generation of pressure oscillations in the space 220 and within the combustion chamber 206 compared to the embodiment of the combustion arrangement 100 of Fig. 1. Further, different frequencies of pressure oscillations may be suppressed, resulting in a different damping profile of the damping device 222.

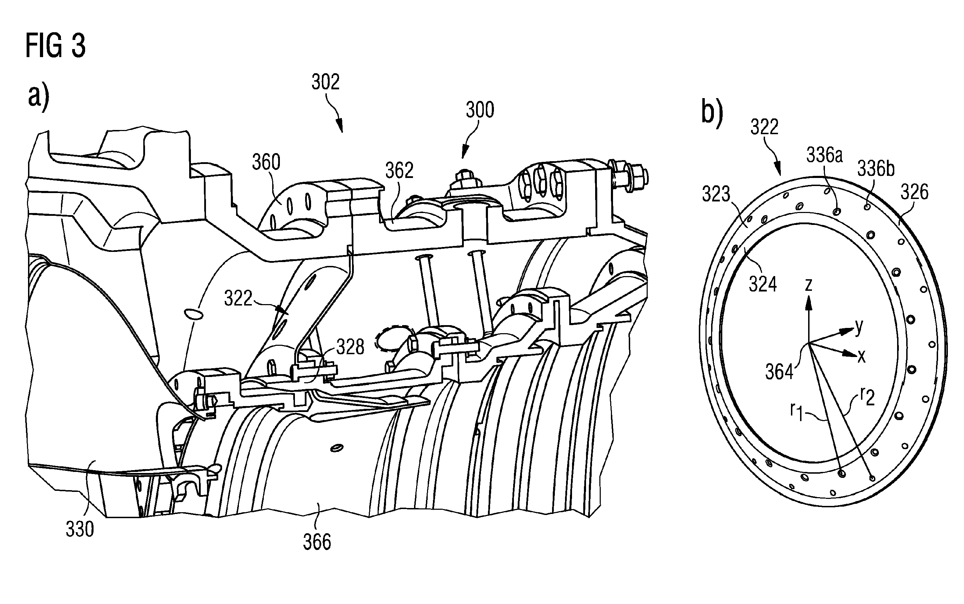

Referring to Fig. 3a, 3b, another combustion arrangement 300 of a gas turbine 302 is illustrated.

The combustion arrangement 300 is similar to the combustion arrangement 100 of Fig. 1 except for the damping device 322.

The damping device 322 comprises a truncated conically shaped body 323 with radially inner and radially outer edge portions 324, 326 extending in a parallel way to one another.

The damping device 322 is clamped between first and second casing portions 360, 362 of the outer casing 304. These casing portions 360, 362 surround nozzle guide vane carrier ring shaped housing members. The edge portion 324 is clamped at the holding element 328.

As illustrated in Fig. 3b, a plurality of through holes 336a and a plurality of further through holes 336b are formed in the damping device body 323. The through holes 336a are arranged at a distance r₁ measured from a center 364 of the damping device 322 and are located at equal distances along a circumferential line of the damping device body 323. The through holes 330b are located at a distance r₂ measured from a center 364 of the damping device 322 and are located at equal distances along a second circumferential line of the damping device body 323. Here, the distance r₁ is smaller than the distance r₂. The through holes 336a, 336b are staggered with respect to one another along the circumference of the damping device 322 in that the through holes 336b are arranged at positions corresponding to a half distance between two adjacent through holes 336a.

The gas turbine 302 further comprises at least a second combustion chamber (not shown) which is arranged substantially co-aligned way with respect to a longitudinal extension of the combustion chamber 306. The outlets of the combustion chamber 306 and the at least one further combustion chamber point towards a common region, namely a space 366 downstream of the ending portion 330 of the combustion chamber 305. The damping device 322 surrounds the longitudinal axis 335 of the combustion chamber 306 and a longitudinal axis of the at least one further combustion chamber.

A plurality of combustion chambers 306 may be located with respect to one another at equal distances along a circumference of the gas turbine 302 and may point in a star-like way towards the space 366. The damping device 322 may then surround all longitudinal axes 335 of the combustion chambers 306.

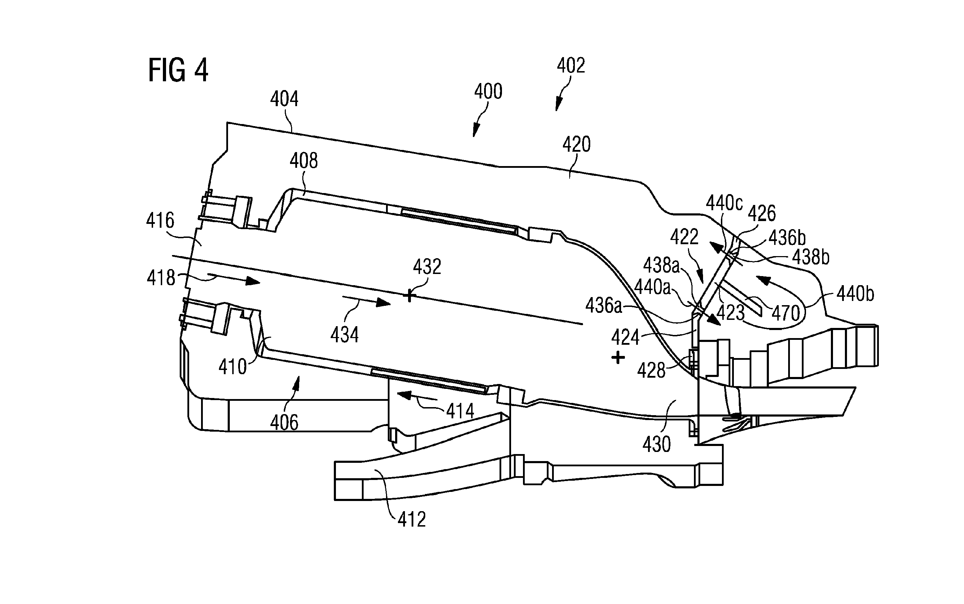

Referring to Fig. 4, a further combustion arrangement 400 of a gas turbine 402 is illustrated.

The combustion arrangement 400 is identical to the combustion arrangement 100 shown in Fig. 1 and further comprises a parting plate 470 which is arranged at a towards downstream facing side of the damping device 422. The parting plate 470 comprises a rectangular shape and further partially divides a space downstream of the damping device 422 into two half-spaces. The parting place 470 is arranged in a substantially perpendicular way compared to an upstream facing surface of the damping device body 423 and runs along a circumferential extension of the damping device body 423. Alternatively, the parting plate 470 may be a bent plate running, in a mounted position, along a circumferential line of the damping device body 423.

In operation of the gas turbine 402, a gas flow indicated by the arrows 440a-c is directed around the parting plate 470 such that the most downstream casing portions adjacent to the space 420 are cooled.

The parting plate 470 improves damping capabilities of the combustion arrangement 400.

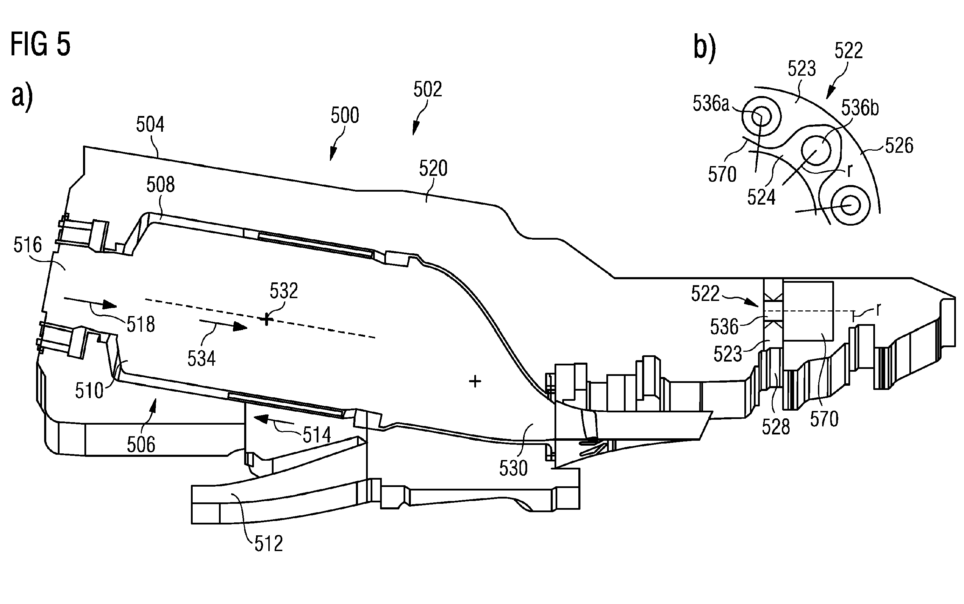

Referring to Fig. 5a, 5b, a further combustion arrangement 500 of a gas turbine 502 will be explained.

The combustion arrangement 500 and the combustion arrangement 200 are identical except for the damping device 522.

The damping device 522 is arranged at a point more downstream within the outer casing 504 compared to the damping device 222. Further, the damping device 522 is designed as a flat, annular plate such that radially inner and radially outer edge portions 524, 526 of the damping device 522 and an extension of the damping device body 523 are coplanar to one another. Further, through holes 536a, 536b which are formed at an equal distance measured from a center of the damping device 522 are tapered in a counter-directional way, such that the damping device 522 comprises a wavy or undulated shape. For illustration purposes, in the cross-sectional view of Fig. 5a, two through holes 536a, 536b are shown at equal positions although, as shown in Fig. 5b, these through holes 536a, 536b are actually spaced apart when seen in a radial direction of the damping device body 523.

A parting plate 570 is arranged at a surface of the damping device 522 downstream of the outer casing 504 and comprises a flat, wavy shape (see Fig. 5b). Thus, the parting pate 570 runs in a wavy way along a circumference of the damping device body 523 around the through holes 536a, 536b. The wavy shape may be like this, that the parting plate 570 will surround a first through hole 536a in a substantially half circle and then surrounds a second through hole 536b in another half circle with an opposite curvature. That results in a continuous s-shaped wall separating each of the through holes 536a, 536b, etc.

For illustration purposes, the parting plate 570 is illustrated in Fig. 5a in such a way that the parting plate 570 comprises a flat, rectangular shape and runs along a radial extension of the damping device body 523.

Alternatively, the parting plate 570 may comprise a flat, rectangular shape and may run along a radial extension of the damping device body 523.

It should be noted that the term "comprising" does not exclude other elements or steps and the use of the articles "a" or "an" does not exclude a plurality. Also elements described in association with different embodiments may be combined. It should also be noted that reference signs in the claims should not be construed as limiting the scope of the claims.

## Claims

1. A damping device (122; 222; 322; 422; 522) for damping pressure oscillations within a combustion chamber (106; 206; 306; 406; 506) of a turbine (102; 202; 302; 402; 402; 502), the damping device (122; 222; 322; 422; 522) comprising a radially extending damping device body (123; 223; 323; 423; 523), wherein the damping device body (123; 223; 323; 423; 523) comprises a radially inner circumferential edge portion (124; 224; 324; 424; 524) and a radially outer circumferential edge portion (126; 226; 326; 426; 526), wherein a through hole (136a; 236a; 336a; 436a; 536a) is formed in the damping device body (123; 223; 323; 423; 523), wherein the through hole (136a; 236a; 336a; 436a; 536a) comprises a tapered shape.

2. The damping device (122; 222; 322; 422; 522) according to claim 1, wherein the damping device body (123; 223; 323; 423; 523) comprises a truncated conical shape.

3. The damping device (122; 222; 322; 422; 522) according to claim 1, wherein the damping device body (123; 223; 323; 423; 523) comprises a flat shape.

4. The damping device (122; 222; 322; 422; 522) according to any one of claims 1 to 3, wherein an ending portion (138a; 238a; 338a; 438a; 538a) of the through hole (136a; 236a; 336a; 436a; 536a) is chamfered.

5. The damping device (122; 222; 322; 422; 522) according to any one of claims 1 to 4, wherein, within a sectional plane being oriented parallel to a longitudinal direction of the through hole (136a; 236a; 336a; 436a; 536a), an ending portion (138a; 238a; 338a; 438a; 538a) of the through hole (136a; 236a; 336a; 436a; 536a) comprises a rounded shape.

6. The damping device (122; 222; 322; 422; 522) according to any one of claims 1 to 5, wherein the damping device body (123; 223; 323; 423; 523) comprises at least one further through hole (136b; 236b; 336b; 436b; 536b), wherein the at least one further through hole (136b; 236b; 336b; 436b; 536b) comprises a tapered shape, wherein the through hole (136a; 236a; 336a; 436a; 536a) and the at least one further through hole (136b; 236b; 336b; 436b; 536b) comprises counter-directional tapered shapes.

7. The damping device (122; 222; 322; 422; 522) according to any one of claims 1 to 6, wherein the through hole (136a; 236a; 336a; 436a; 536a) and the at least one further through hole (136b; 236b; 336b; 436b; 536b) are arranged at radially different distances from a centre (364) of the damping device (122; 222; 322; 422; 522).

8. A combustion arrangement (100; 200; 300; 400; 500) for a turbine (102; 202; 302; 402; 402; 502), the combustion arrangement (100; 200; 300; 400; 500) comprising
- an outer casing (104; 204; 304; 404; 504),
- a combustion chamber (106; 206; 306; 406; 506) for defining a combustion space for burning fuel, wherein the combustion chamber (106; 206; 306; 406; 506) is arranged within the casing (104; 204; 304; 404; 504), and
- a damping device (122; 222; 322; 422; 522) according to any one of claims 1 to 7, wherein the damping device (122; 222; 322; 422; 522) is arranged within the casing (104; 204; 304; 404; 504) outside of the combustion chamber (106; 206; 306; 406; 506).

9. The combustion arrangement (100; 200; 300; 400; 500) according to claim 8, wherein the damping device (122; 222; 322; 422; 522) is arranged downstream of a centre of the combustion chamber (106; 206; 306; 406; 506), particularly at an ending portion of the combustion chamber (106; 206; 306; 406; 506), further particularly downstream of the combustion chamber (106; 206; 306; 406; 506).

10. The combustion arrangement (100; 200; 300; 400; 500) according to claim 8 to 9, wherein the damping device (122; 222; 322; 422; 522) circumferentially surrounds a longitudinal axis (135; 235; 335; 435; 535) of the combustion chamber (106; 206; 306; 406; 506).

11. The combustion arrangement (100; 200; 300; 400; 500) according to any one of claims 8 or 10, the combustion arrangement (100; 200; 300; 400; 500) further comprising
- at least one further combustion chamber for defining a further combustion space for burning fuel,
wherein the damping device (122; 222; 322; 422; 522) circumferentially surrounds the longitudinal axis (135; 235; 335; 435; 535) of the combustion chamber (106; 206; 306; 406; 506) and a further longitudinal axis of the at least one further combustion chamber (106; 206; 306; 406; 506).

12. The combustion arrangement (100; 200; 300; 400; 500) according to any one of claims 8 to 11, the combustion arrangement (100; 200; 300; 400; 500) further comprising
- a parting plate (470; 570) adapted for at least partially parting a space defined between the casing (104; 204; 304; 404; 504) and the combustion chamber (106; 206; 306; 406; 506) and/or the at least one further combustion chamber.

13. The combustion arrangement (100; 200; 300; 400; 500) according to claim 12, wherein the parting plate (470; 570) transversely extends from the damping device (122; 222; 322; 422; 522) particularly in a downstream direction.

14. A turbine (102; 202; 302; 402; 402; 502), particularly a gas turbine (102; 202; 302; 402; 402; 502), the turbine (102; 202; 302; 402; 402; 502) comprising a combustion arrangement (100; 200; 300; 400; 500) according to any one of claims 8 to 13.

15. A method of damping pressure oscillations within a combustion chamber (106; 206; 306; 406; 506) of a turbine (102; 202; 302; 402; 402; 502) by using a damping device (122; 222; 322; 422; 522) according to any one of claims 1 to 7.
